# EUROPEAN PATENT APPLICATION

(11) **EP 2 174 830 A1**
(43) Date of publication of application: **14.04.2010**
(21) Application number: 09172430.2
(22) Date of filing: 07.10.2009
(51) Int. Cl.: B60P 3/04

(54) **Trailer for transport of animals**

(30) Priority: 07.10.2008 NL 2002068
(71) Applicant: Berdex Carrosserie- en Handelsonderneming B.V., 5446 PL Wanroij (NL)
(72) Inventor: van Schijndel, Hubertus Adrianus Johannes Catharin, 5845 EP, Sint-Anthonis (NL)
(74) Representative: Hatzmann, Martin

(57) **Abstract**

A truck trailer for transport of animals, in particular breeding and/or slaughter cattle, wherein the truck trailer (1) is provided with a loading space (2), wherein the loading space (2) is provided with substantially closed front (4), back (5), bottom (6), top (7) and side walls (8), wherein the truck trailer (1) is provided with an air supply and discharge system (3) which is arranged to maintain air conditions in the loading space (2) for the purpose of keeping the animals to be transported alive, wherein the air supply and discharge system (3) is provided with at least one downwardly directed air outflow opening (11).

## Description

The invention relates to a truck trailer for transport of animals, in particular breeding and/or slaughter cattle, wherein the truck trailer is provided with a loading space.

Such a trailer is known from practice and is usually part of a truck. Herein, the term truck is also understood to mean a truck combination. The loading space of the truck trailer serves to accommodate the animals to be transported. The known trailer is provided with openings in the side wall which allow a direct exchange of air from the environment to the loading space and in the opposite direction. As a result thereof, during transport, this loading space is well ventilated with outside air for the benefit of oxygen supply for the animals. In addition, by the ventilation, it is brought about that the carbon dioxide content in the air in the loading space remains at a level which is safe for the animals.

A drawback of the known truck trailer is that the air conditions in the loading space are not well controllable. Thus, in the loading space, an excessive draft may prevail. Further, the temperature in the loading space may be subject to relatively large temperature fluctuations or reach an undesirably low or high value. Such draft and/or temperature control problems may be very unpleasant for the animals to be transported. In addition, these problems may damage the health of the animals. Further, the air conditions prove to differ greatly, depending on the loading of the loading space.

The present invention contemplates an improved trailer. In particular, the invention contemplates a trailer with which relatively many animals can be transported efficiently, in accurately and reliably controllable conditions.

To this end, a trailer is provided which is characterized by the features of claim 1.

The truck trailer is provided with a loading space, wherein the loading space is provided with substantially closed front, back, bottom, top and side walls, wherein the truck trailer is provided with an air supply and discharge system which is arranged to maintain air conditions in the loading space for the benefit of keeping the animals to be transported alive, wherein the air supply and discharge system is provided with at least one downwardly directed air outflow opening.

In this manner, the air conditions in the loading space can be controlled reliably, to be able to provide the animals with a comfortable transport, with good air conditions. Here, it can be avoided that an air supply of the air supply and discharge system becomes clogged, for instance by manure and other pollution coming from the animals, in particular by the use of the at least one downwardly directed air outflow opening.

According to a preferred embodiment, the air supply and discharge system is only provided with downwardly directed air outflow openings.

The trailer may, for instance, be provided with a (horizontal) bottom extending below the loading space, to bear the animals. The bottom may, for instance, have a completely closed, for instance fluid-tight, design and is preferably not provided with air outflow openings.

The trailer may, for instance, be provided with at least one horizontal wall extending or bringable above a respective part of the loading space, which wall is provided with one or more downwardly directed air outflow openings to supply air to the space extending below this wall. The horizontal wall comprises, for instance, a partition wall, to divide the loading space into different loading levels, or a top wall (ceiling) of the loading space.

An above-mentioned partition wall may, for instance, supply air to a part of the loading space located below it, to provide animals present in that part with conditioned air. A top side of the partition wall is preferably completely closed, for instance fluid-tight, and may serve as a bottom for a part of the loading space located above the partition wall.

Preferably, one or more downwardly directed air discharge openings are also provided. Clogging of such discharge openings can likewise be avoided well. Then, it is extra advantageous if the trailer is provided with air discharge openings located along or at a short distance from side walls of the trailer, while the above-mentioned at least one air outflow opening is positioned between the air discharge openings. In this manner, a good air circulation can be obtained in the whole loading space, so that all animals can be provided with sufficient fresh air, and so that used air can be discharged reliably.

The air supply and discharge system may further be provided with at least one air discharge channel, to discharge air coming from the loading space, while the trailer is provided with a cleaning system arranged to supply a cleaning fluid to the discharge channel. In this manner, the above-mentioned discharge channel can undergo a cleaning treatment, irrespective of the location of the trailer, for instance in remote areas. The cleaning system may be designed in various manners. The system may, for instance, be provided with a reservoir which is fillable with cleaning product. An above-mentioned cleaning product may comprise a fluid, for instance water, which is preferably provided with a disinfectant, or a different cleaning product.

A particularly advantageous elaboration comprises a cleaning system which is provided with a hose, provided with a spray head, which is introducible into the air discharge channel. With this, the channel can be cleaned thoroughly and reliably.

The invention further provides a method for conditioning a loading space, in particular the loading space for transport of animals, in particular of an apparatus according to the invention, where conditioned air is fed downwards into the loading space. With this, the above-mentioned advantages can be achieved.

According to an elaboration, the conditioned air is supplied to the loading space at a distance from side walls of this space. Air may, for instance, be discharged from the loading space near side walls of this space (for instance through supply openings, extending on both sides of one or more downwardly directed discharge openings).

Alternatively, the conditioned air may be supplied to the loading space near side walls of this space, and air may, for instance, be discharged from the loading space at a distance from these side walls (for instance centrally, for instance between downwardly directed supply openings).

According to a further elaboration, the loading space is divided into different parts, utilizing one or more horizontal partition walls, while, to each of the parts of the loading space, air is (separately) let in in downward direction. Thus, the loading space can be filled optimally, while the animals can be provided with a well-conditioned environment. Preferably, the different parts of the loading space can be conditioned independently of one another, for instance for air temperature, and/or atmospheric humidity, and/or air quality. Different parts of the loading space may, for instance, be airtightly separated from one another. What is particularly advantageous is an embodiment in which the above-mentioned partition walls are detachable, pivotable, foldable and/or height-adjustable, so that the loading space can be subdivided in various manners.

Further elaborations of the invention are described in the subclaims. The invention will now be explained in more detail on the basis of an example and with reference to the drawing, in which:

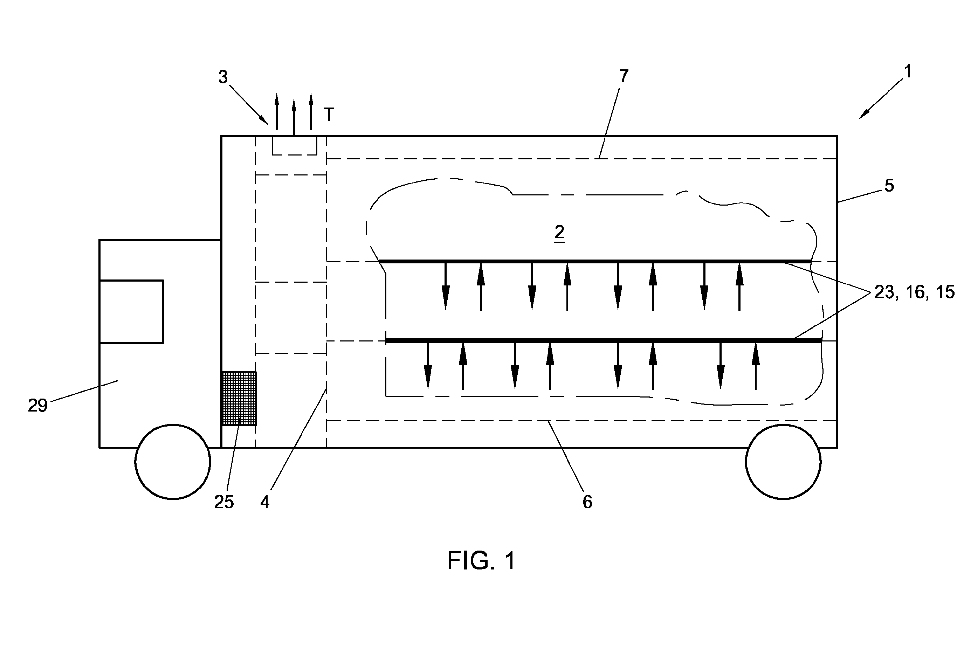

Fig.1 schematically shows a partly cutaway exemplary embodiment of the invention, in side elevational view;
Fig. 2 shows a cutaway top plan view of a part of the exemplary embodiment;
Fig. 3 shows a cross section across line III-III of Fig. 2;
Fig. 4 shows a cross section across line IV-IV of Fig. 2;
Fig. 5 shows a detail of an underside of a wall; and
Fig. 6 schematically shows a part of a cleaning system.

In this application, same or corresponding features are designated by same or corresponding reference symbols.

The Figures show a truck which is provided with a truck trailer 1 for transport of animals, and with a driver's cabin 29 for a driver of the truck. The trailer 1 is provided with a loading space 2 with a substantially closed front wall 4, back wall 5, bottom wall 6, top wall 7 and two substantially closed side walls 8. As the Figure shows, the present trailer comprises different horizontal walls, i.e. partition floors 23 and the top wall 7, extending above respective loading space parts. The back wall 5 may, for instance, be provided with a loading/unloading access substantially airtightly closable by means of a tailgate. In this example, each partition floor 23 is built up from a series of parallel, hollow (for instance metal or steel) sections, providing air channels 15, 16 (see below).

The loading space 2 may be provided with one or more (horizontal) partition floors 23, which are preferably height-adjustable. Height adjustment may, for instance, be possible when no load is present on the floor 23; alternatively, the floor 23 is adjustable when a load is present thereon. Each above-mentioned partition floor 23 is, in an operative position, preferably parallel to the bottom floor 6 of the trailer 1.

Optionally, the loading space 2 may be provided with pivotable partition floors, which are, for instance, connected to side walls of the space by means of pivots, such that each partition floor is pivotable between a folded-down and folded-up pivoting position.

Alternatively, the loading space is provided with one or more fixedly arranged partition floors 23, or with no partition floor at all.

The partition floors 23 can provide respective transport levels above a transport level provided by the floor 6 in the loading space 2, so that the transport volume of the loading space 2 can be utilized optimally.

In the truck trailer 1, an air supply and discharge system 3 is arranged, preferably on a side of the loading space front wall 5 facing away from the loading space 2. This air supply and discharge system 3 is provided with air supply means 11, 15, 25, 33 to supply ambient air coming from the environment of the loading space 2 to the loading space 2. Further, the air supply and discharge system 3 is provided with air discharge means 12, 16, 18 to discharge air from the loading space 2 to the environment.

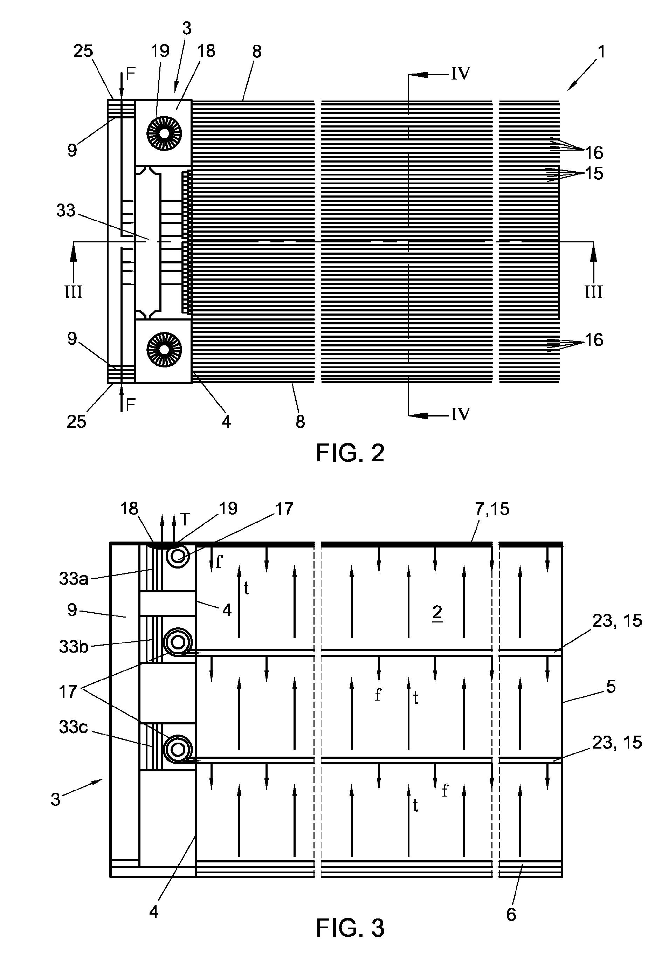

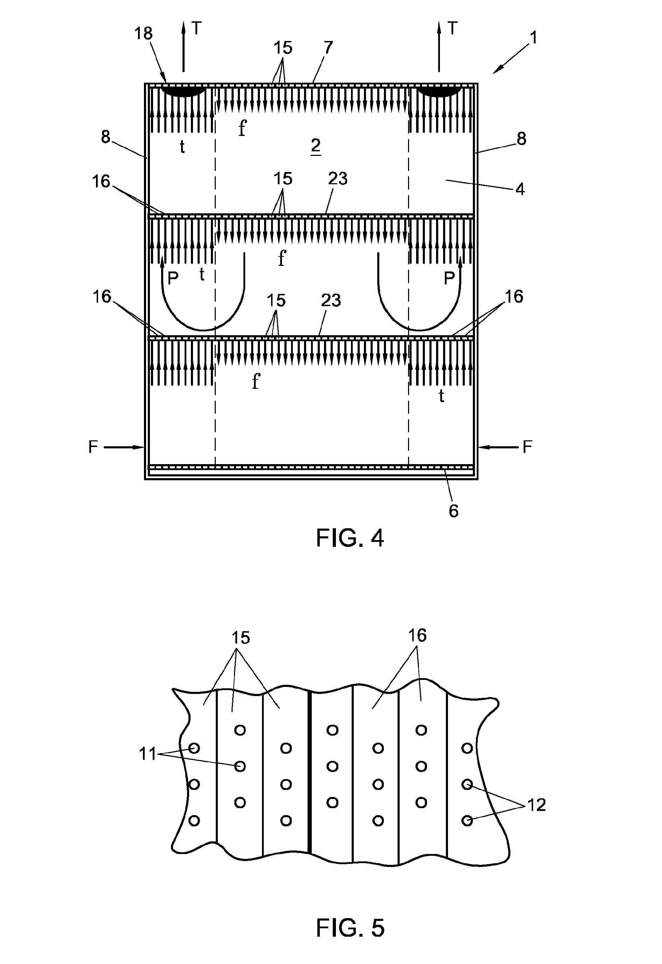

The air supply means comprise, for instance, one or more air inlets 25. The example comprises at least two air inlets 25 (arranged on both sides of the trailer 1), provided in front side wall parts of the trailer 1. It will be clear that the air inlets 25 may also be located in the bulkhead and/or the roof of the truck trailer 1. Inflow of air is indicated by arrows F (see Figs. 2, 4).

As the Figures show, each air inlet 25 is connected, via an air treatment system 9, to air distribution channels 15 extending along and through the loading space 2. One or more air pumps, for instance fans 17, may be provided for the benefit of generating an air flow from the air inlet 25 to the distribution channels 15.

The air supply and discharge system 3 may further, for instance, be provided with filter means 9 (in themselves schematically represented), for instance a coarse filter and a fine filter. With these filters, the ambient air to be supplied can be cleared from relatively coarse and relatively fine particles and pollutants, respectively. Further, for instance, a HEPA (high effective particulate air) filter may be provided, to filter germs and/or air pollution from the air to be supplied. Preferably, the HEPA filter is arranged to filter particles having a diameter of at least 0.3 microns from the air. By utilizing the HEPA filter, the risk of animals present in the loading space 2 coming into contact with germs and/or air pollution supplied via the ambient air is reduced considerably.

The air supply and discharge system 3 further comprises an air temperature control system 33 (in itself schematically represented) for controlling the temperature of the ambient air to be supplied to the loading space 2. The control system may be provided with a cooling system, a heating system, a fluid buffer reservoir and a heat exchanger. The cooling and heating system may be arranged to cool or heat, respectively, the heat transfer fluid present in the buffer reservoir. To this end, the cooling system or heating system may be coupled, via a fluid pipe, to a fluid pipe coupled to the reservoir via, for instance, a three-way valve. With this three-way valve, it can be controlled whether the cooling system or the heating system is used.

An above-mentioned heat exchanger of air temperature control system 33 is preferably arranged to bring heat transfer fluid into heat exchange contact with the air flowing through a pipe system from the above-mentioned air inlet 25 (and optional filter means 9) towards the distribution channels 15, for controlling the temperature of this air. By utilizing the optional buffer vessel, relatively large temperature fluctuations of the heat transfer fluid, and therefore of the air to be supplied to the loading space 2, can be prevented.

The above-mentioned cooling system of the air temperature control system 33 may comprise a commercially available cooling system, for instance a conventional cooling unit provided with a compressor, condenser, evaporator and the like. Analogously, the heating system of the air temperature control system 33 may comprise a conventional heating system, for instance an electric heating system, a combustion heater using truck fuel, such as for instance a diesel heater, or the like. The heat transfer fluid may, for instance, comprise a fluid such as water, or a gas. By way of clarification, pump means for the benefit of circulating the heat transfer fluid are not shown in the drawing.

It is advantageous when the cabin 29 of the truck is provided with means for the benefit or controlling, regulating and/or monitoring the condition of the air supply and discharge system 3. This allows a driver of the truck to simply monitor, and if desired, adjust the condition of the air supply and discharge system 3 during driving. Further, the air supply and discharge system 3 may be provided with a climate control computer for accurate, automatic control of the climate in the loading space 2.

As the Figures show, the air supply and discharge system 3 is, in a particularly advantageous manner, provided with air distribution channels 15 extending in longitudinal direction of the trailer, each provided with downwardly directed air outflow openings 11 (see Figs. 4, 5). The air distribution channels 15 are preferably completely integrated in the optional partition floors 23 and in the top wall 7. Flow of air from the openings 11 is indicated by arrows f. With use of height-adjustable partition floors 23, for instance, adjustable or flexible couplings may be provided to couple the air distribution channels 15 to an upstream part of the air supply and discharge system 3.

In particular, the present trailer 1 comprises a bottom wall 6, having a closed top side, and one or more partition walls 23 extending opposite thereof and a top wall 7, while an underside of each partition wall 23 and the top wall 7 is provided with a respective series of air outflow openings. A top side of each partition wall 23 is preferably fluid-tightly closed.

It is extra advantageous that the trailer 1 further comprises only downwardly directed air discharge openings 12 (see Fig. 5), which are preferably also integrated in the horizontal walls (partition wall 23 and the top wall 7), via respective discharge channels 16, to discharge air from the loading space 2. In particular, an (in this example flat, horizontal) underside of each partition floor 23 and the top wall 7 is provided both with downwardly directed discharge openings 12 and with downwardly directed air outflow openings 11. In this case, it also holds that with use of height-adjustable partition walls 23, for instance, adjustable or flexible couplings may be provided to couple the discharge channels 16 to a downstream part of the air supply and discharge system 3.

Preferably, the trailer is provided with air supply channels 15 extending in a trailer longitudinal direction, which are each provided with respective downwardly directed air outflow openings 11. As mentioned, the partition floors 23 comprise, for instance, series of hollow sections (box sections), providing the air channels 15, 16. Here, a group of center sections may be connected to the air supply, to provide the air supply channels 15. Groups of outer hollow sections, between which the center sections are located, can be connected to the air discharge, to provide air discharge channels 16. In a similar manner, a top wall 7 of the loading space 2 may be provided with a central group of parallel supply channels 15, and parallel discharge channels 16 extending on both sides thereof. In this manner, the partition floors 23 may have a lightweight and durable design. The supply and discharge channels 15, 16 may, for instance, each have a rectangular or square cross section (see Fig. 4), or have a different design.

As follows from the Figures, the partition floors 23 and the top wall 7 are each, preferably over a whole length and width, provided with air openings 11, 12 (provided at a distance from one another) and respective air channels 15, 16. The air openings 11, 12 may, for instance, be provided uniformly in the underside of the respective wall 23, 7, or according to a particular variation (for instance with an increasing or decreasing density per square meter of wall surface), according to a particular arrangement or randomly distributed. Preferably, a neighbor distance between air openings 11, 12 is smaller than 1 m, preferably smaller than 10 cm, for substantially all (preferably for each of the) air openings 11, 12.

In this example, the supply and discharge openings 11, 12 each have a circular cross section; the openings may, for instance, be bored in respective walls 23, 7 of the trailer. Supply and discharge openings 11, 12 may also have a different shape, for instance angular. Further, the air outflow openings 11 may, for instance, be arranged to let air flow out perpendicularly downwards (at an angle of 90° with respect to the underside of a respective wall part 23, 7), or obliquely downwards (for instance in a range of 45-90° with respect to the underside of a respective wall part 23, 7). Each air flow openings 11 may, for instance, be arranged to let a relatively narrow air beam flow out, or a wide (divergent) air beam, with a particular pressure difference prevailing over the opening 11.

In particular, the air discharge openings 12 are at a short distance from side walls 8 of the trailer 1. Flow of air to the discharge openings 12 is indicated by arrows t. The above-mentioned air outflow openings 11 are, for instance, all positioned in a central air supply area, which air supply area is bounded on both sides by discharge areas defined by the air discharge openings 12. In this manner, a particular good, effective air circulation can be obtained in the trailer 1, which is indicated by arrows P in Fig. 4 for one of the loading space parts.

The example comprises air supply channels 15 extending at different vertical levels, and different air supply control means arranged upstream with respect to these channels 15, in particular to control supply of air to the different levels separately. To this end, the example comprises separate air pumps 17 which are coupled to respective channels 15 of the respective levels.

Further, an air temperature control system 33 is provided which can treat the temperature of air to be supplied to the different channel levels separately. To this end, the air temperature control system 33 is provided with at least two (in this example three) separate subsystems 33a, 33b, 33c, which are each, for instance, associated with a respective air pump. Each of the subsystems 33a, 33b, 33c may, for instance, be provided with its own heat exchanger, to control air temperature of air to be supplied to an associated loading space zone.

The above-mentioned parallel air discharge channels 16 are, for instance, connected to one or more air outlets 18 (in this example two) of the trailer 1. Air discharge via the outlets is indicated by arrows T. Each air inlet 18 may, for instance, comprise a collecting channel, to which horizontal air discharge channels 15 are connected. Further, each air outlet 18 may, for instance, be provided with an air pump, for instance fan 19, to control or promote air outflow via the outlet.

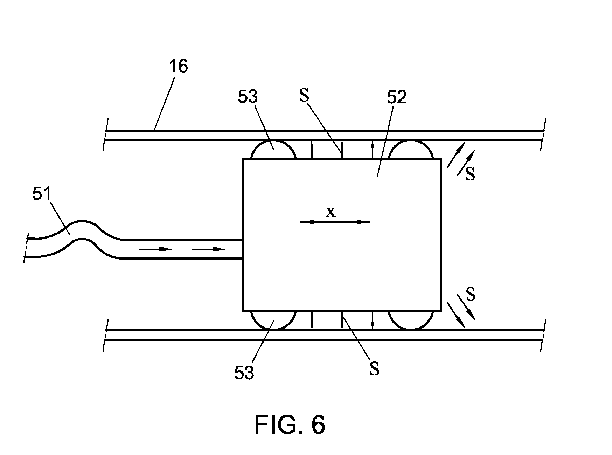

Preferably, the trailer 1 is provided with an optional cleaning system arranged to supply a cleaning fluid to the air discharge channels. A part of this system is shown in Fig. 6. The cleaning system is, for instance, provided with a hose 51, with a spray head 52, which is introducible into an above-mentioned air discharge channel 16. Preferably, the cleaning system further comprises a reservoir (not shown in itself) filled with cleaning product, and a pump to pump cleaning product from the reservoir via the hose 51 to the spray head 52. The spray head 52 may be provided with one or more nozzles, to spray supplied cleaning product into the channel 16 (which is indicated by arrows S). It is particularly advantageous to use a spray head 52 which can move itself through the air channel 16; arrow X indicates movement of the head 52. The spray head 52 may, for instance, be provided with one or more driven engaging wheels 53, or the like, to engage an inside of the air channel and to move the head through the channel. Such a robot spray head may, for instance, be controllable via an optionally wireless remote control (not shown).

In use of the truck, one or more levels of the loading space 2 may be loaded with animals 10 to be transported. During transport, the animals can preferably move freely over the floors 6, 23 of the loading space and are, for instance, not loaded by means of stacked crates.

Then the loading space 2 is closed preferably substantially airtightly.

The loading space 2 is then conditioned, the air treated by the air supply and discharge system 3 being fed downwards into the loading space, via the groups of downwardly directed outflow openings (at a distance from side walls of the loading space). An inflow direction of the air may, for instance, make an angle of between minus and plus 180 degrees (and more in particular plus and minus 90 degrees).

The air discharge channels 16 are operative to discharge air near side walls of the loading space from this space, via the discharge openings 12.

By means of separate control via the different subsystems 33a, 33b, 33c, air can be blown into the loading space 2 via the relatively large number of outflow openings 11, while supply of air to different groups of outflow openings 11 is controlled separately.

During use, the treatment systems 33a, 33b, 33c can bring supplied outside air to a temperature comfortable for the animals. Optionally, the air is filtered, by filter means 9, such that the risk of infection of the animals with a disease coming from the environment is small. An optional UV light source (not shown) may be used for irradiating entering air with UV light, for the purpose of disinfecting the entering air. Air supply pumps 17 and discharge pumps 19 may, for instance, be controlled such that an air pressure in the loading space 2 obtains a particular, desired value. The air pressure in the space 2 may, for instance, be slightly higher than an environmental pressure (overpressure), lower (underpressure), or be equal to an (atmospheric) environmental pressure.

According to a further elaboration, the air supply and discharge system 3 may be arranged to render germs and/or odors present in the air to be discharged from the loading space 2 to the environment harmless and/or to filter them from this air. When, in the former case, germs have been rendered harmless and/or have been filtered from the air, animals infected with a disease can be transported in the loading space 2 of the truck trailer 1 without the loading space 2 being a source of infection which can spread a disease along the transport route of the trailer 1 via the discharge of infected air to the environment. To this end, the air supply and discharge system 3 may be provided with a UV light source for irradiating the air discharged from the loading space with UV light for the purpose of disinfecting the exiting air.

In the second case, when odors are rendered harmless and/or are filtered from the air, an environment can be prevented from experiencing nuisance because of these odors. This is advantageous when the trailer 1 is, for instance, ferried, since, in that case, the trailer 1 can be parked on the lower deck without causing odor nuisance there.

Preferably, the partition floors 23 may also provide floor heating to loading space parts extending above these floors. To this end, the partition floors may, for instance, be manufactured from material with a relatively high heat conduction coefficient.

The trailer provided by the invention can provide a particularly spacious loading space 2 which can be conditioned in a reliable manner and can be cleaned relatively simply. By providing air outflow openings above the space to be conditioned for animals, the animals can be kept at a relatively safe distance from the outflow openings, for instance such that the animals are not exposed to extremely low or high temperatures. Further, a relatively large group of animals can relatively homogeneously be provided with conditioned air, so that overheating or hypothermia of some animals compared to the rest of the group can be avoided adequately.

The loading space (or a part thereof, with use of partition floors 23) may, for instance, be loaded with animals of such dimensions that a distance between the animals and the air outflow openings is always larger than 10 cm, preferably 30 cm and more preferably 50 cm.

If animals of different dimensions, in particular heights, need to be transported with the trailer 1, it is advantageous to subdivide the loading space 2 into sections with different heights utilizing one or more partition floors 23. A first group of relatively low animals may then, for instance, be transported in a first, relatively low section of the loading space 2. A second group of animals, which animals are higher than the animals of the first group, may then, for instance, be transported in a second section of the space 2, which second section is higher than the first section.

According to a further embodiment, the loading space 2 is subdivided into at least four loading levels, preferably at least five, for instance six. Such a division, utilizing three, four or at least five partition floors 23, is for instance advantageous to transport a relatively large amount of poultry (for instance chickens). Use of, for instance, stacked crates to transport chickens on top of one another can thus be avoided.

Further, the optional cleaning system 51, 52 may be used to thoroughly clean preferably at least the air discharge channels 16. Here, the arrangement of these channels 16 shown in the Figures, i.e. along and near side walls of the loading space 2, offers the advantage of a good accessibility of the discharge channels 16. For the purpose of cleaning, the discharge channels 16 may, for instance, be closed off from a downstream air discharge 18, 19, for instance utilizing valves optionally provided for this purpose (not shown). Further, the discharge channels 16 may, for instance, each be provided with a closable access, which, in opened condition, allows the spray head 52 and hose 51 to be introduced into the channel 16. As an alternative to a movable spray head 52 and hose 51, for instance, different fixedly arranged spray devices may be provided, to flush the air discharge channels 16 with cleaning product.

It goes without saying that the invention is not limited to the exemplary embodiment described. Various modifications are possible within the framework of the invention.

Thus, a truck or truck combination may be provided with several truck trailers 1 according to the present invention. Analogously, a trailer 1 may be provided with several loading spaces 2. The loading space 2 may be provided with a substantially airtightly closable loading/unloading access. The access to the loading space 2 may be closed off in different manners, for instance by means of a tailgate 10, doors, a roll-down shutter or the like. Further, the loading space 2 may be provided with discharge means for the purpose of discharging dirt, excrements, urine, cleaning fluid and the like. Such discharge means may, for instance, be provided in the floors.

Optional filter means may be designed in different manners and comprise, for instance, carbon filters, multi-V filters, grids, and the like. Air may further be treated in different manners to render germs present in this air harmless, for instance by means of a chemical treatment and/or a temperature treatment.

The animals to be transported with the trailer 1 may, for instance, comprise pigs, sheep, cattle, horses, poultry or a combination of these or different animals.

A preferred embodiment in addition comprises use of at least one sensor, for instance a CO2 (carbon dioxide) sensor, to measure air quality in the loading space 2. The sensor may, for instance, be part of the above-mentioned air treatment system. The sensor may, for instance, be connected to an alarm device, for instance arranged to alarm a driver of the respective truck if the sensor detects that a particular air quality parameter (for instance CO2 concentration) reaches or exceeds a particular threshold value.

## Claims

1. A truck trailer for transport of animals, in particular breeding and/or slaughter cattle, wherein the truck trailer (1) is provided with a loading space (2), wherein the loading space (2) is provided with substantially closed front (4), back (5), bottom (6), top (7) and side walls (8), wherein the truck trailer (1) is provided with an air supply and discharge system (3) which is arranged to maintain air conditions in the loading space (2) for the purpose of keeping the animals to be transported alive, wherein the air supply and discharge system (3) is provided with at least one downwardly directed air outflow opening (11).

2. A trailer according to claim 1, wherein the air supply and discharge system (3) is only provided with downwardly directed air outflow openings (11).

3. A trailer according to any one of the preceding claims, provided with at least one horizontal wall (7, 23) extending or bringable above a respective part of the loading space, which wall is provided with said air outflow opening (11).

4. A trailer according to any one of the preceding claims, provided with a bottom wall with a closed top side, and a partition wall extending opposite thereto, wherein an underside of the partition wall is provided with said air outflow opening (11), and wherein a top side of the partition wall is closed.

5. A trailer according to any one of the preceding claims, further provided with one or more downwardly directed air discharge openings (12).

6. A trailer according to claim 5, provided with air discharge openings (12) located along or at a short distance from side walls of the trailer, wherein said air outflow opening (11) is positioned between the air discharge openings (12).

7. A trailer according to claim 5 or 6, provided with one or more horizontal walls extending above respective loading space parts, wherein an underside of each horizontal wall is provided both with said one or more downwardly directed air discharge openings (12) and with the at least one downwardly directed air outflow opening (11).

8. A trailer according to any one of the preceding claims, provided with air supply channels (15) extending in a trailer longitudinal direction, which are each provided with respective, downwardly directed air outflow openings (11).

9. A trailer according to claim 8, provided with air supply channels (15) extending at different vertical levels, and different air supply control means arranged upstream of these channels, in particular to control supply of air to the different levels separately.

10. A trailer according to any one of the preceding claims, wherein the air supply and discharge system (3) is provided with at least one air discharge channel (16), to discharge air coming from the loading space, wherein the trailer is preferably provided with a cleaning system (51, 52) arranged to supply a cleaning fluid to the discharge channel (16).

11. A trailer according to claim 10, wherein the cleaning system is provided with a hose (51), provided with a spray head (52), which is introducible into the channel.

12. A method for conditioning a loading space, in particular the loading space for transport of animals, in particular an apparatus according to any one of the preceding claims, wherein conditioned air is fed downwards into the loading space (2).

13. A method according to claim 12, wherein the conditioned air is supplied to the loading space at a distance from side walls of this space, wherein air is preferably discharged from the loading space near side walls of this space.

14. A method according to claim 12, wherein the conditioned air is supplied to the loading space near side walls of this space, wherein air is preferably discharged from the loading space at a distance from the side walls of this space.

15. A method according to any one of claims 12-14, wherein the loading space is subdivided into different parts, utilizing one or more horizontal partition walls, wherein, to each of the parts of the loading space, air is let in in downward direction.

16. A method according to any one of claims 12-15, wherein an inflow direction of the air makes an angle between minus and plus 180 degrees.

17. A method according to any one of claims 12-16, wherein air is blown into the loading space via a large number of outflow openings, wherein supply of air to different groups of outflow openings is preferably controlled separately, and wherein air is preferably exhausted from the loading space via a large number of exhaust openings.

18. A method according to any one of claims 12-17, wherein the loading space is loaded with animals of such dimensions that a distance between animals present in the space (2) and air outflow openings (11) is always larger than 10 cm, preferably 30 cm and more preferably 50 cm.
